# EUROPEAN PATENT APPLICATION

(11) **EP 4 450 814 A1**
(43) Date of publication of application: **23.10.2024**
(21) Application number: 22907155.0
(22) Date of filing: 24.11.2022
(51) Int. Cl.: F04B 51/00, E02F 9/00, F04B 49/10

(54) **PUMP DIAGNOSTIC DEVICE AND CONSTRUCTION MACHINE**

(30) Priority: 13.12.2021 JP 2021201705
(71) Applicant: Hitachi Construction Machinery Co., Ltd., Tokyo 110-0015 (JP)
(72) Inventor: SOGA, Kosuke, Tsuchiura-shi, Ibaraki 300-0013 (JP)
(74) Representative: MERH-IP Matias Erny Reichl Hoffmann Patentanwälte PartG mbB
(86) International application number: PCT/JP2022/043304
(87) International publication number: WO 2023/112624

(57) **Abstract**

Provided is a pump diagnostic device and construction machine capable of performing precise and accurate diagnosis. A diagnostic device 40 for a hydraulic pump 1 includes an action instruction section 42 that outputs an action instruction for causing a hydraulic actuator 29 of a hydraulic excavator 200 to perform a specific action, a measurement condition setting section 44 that sets a sampling condition in measurement of a pressure of the hydraulic pump 1 during the specific action, a calculation section 46 that acquires a measured value of the pressure sampled during the specific action under the set sampling condition, and calculates a pressure pulsation amplitude of the hydraulic pump 1, an anomaly determination section 47 that determines whether there is an anomaly in the hydraulic pump 1 based on the calculated pressure pulsation amplitude, and an output section 48 that outputs a determination result obtained by the anomaly determination section 47.

## Description

### Technical Field

The present invention relates to a pump diagnostic device, and a construction machine including the diagnostic device.

### Background Art

There is a device for diagnosing a hydraulic pump mounted on a construction machine, such as a hydraulic excavator, by analyzing a pressure of the hydraulic pump, such as a discharge pressure or a drain pressure, without separating the hydraulic pump into components (for example, Patent Literature 1).

Patent Literature 1 discloses a technique of diagnosing a hydraulic pump based on the frequency component of the pressure coinciding with the rotational frequency of the hydraulic pump. According to Patent Literature 1, when friction occurs in a piston shoe of the hydraulic pump, the frequency component of the pressure coinciding with the rotational frequency of the hydraulic pump increases. Thus, through analysis of such a frequency component of the pressure, the technique of Patent Literature 1 can diagnose the hydraulic pump.

### Citation List

### Patent Literature

Patent Literature 1: JP 2013-170509 A

### Summary of Invention

### Technical Problem

However, in the operating construction machine performing digging action, turning action, and the like, the load of the hydraulic pump momentarily changes, and accordingly the rotational speed of the hydraulic pump also momentarily changes. Thus, there is a possibility that the frequency component of the pressure of the hydraulic pump could not be acquired stably. For this reason, the technique disclosed in Patent Literature 1 needs some improvement to achieve a precise and accurate diagnosis.

In view of the above, it is an object of the present invention to provide a pump diagnostic device and a construction machine capable of performing a precise and accurate diagnosis.

### Solution to Problem

To solve the above issue, the pump diagnostic device according to the present invention is a diagnostic device for diagnosing a pump mounted on a construction machine and driven by a prime mover of the construction machine to supply pressure oil to a hydraulic actuator of the construction machine. The diagnostic device includes: an action instruction section that outputs an action instruction for causing the hydraulic actuator to perform a specific action; a measurement condition setting section that sets a sampling condition in measurement of a pressure of the pump during the specific action; a calculation section that acquires a measured value of the pressure sampled during the specific action under the set sampling condition, and calculates a pressure pulsation amplitude of the pump; an anomaly determination section that determines whether there is an anomaly in the pump based on the calculated pressure pulsation amplitude; and an output section that outputs a determination result obtained by the anomaly determination section to a display device.

In addition, the construction machine according to the present invention is a construction machine including a lower traveling body that is able to self-propel, an upper turning body turnably supported relative to the lower traveling body, a front work device provided on the upper turning body, a hydraulic actuator that drives the front work device, a pump that supplies pressure oil to the hydraulic actuator, a pressure sensor that measures a pressure of the pump, and a display device that displays various kinds of information to an operator. The construction machine includes a controller that causes the display device to display an operation instruction for an action of the front work device and diagnoses the pump. The controller is configured to: cause the display device to display a screen instructing the operator to operate the construction machine to perform a diagnostic action while showing the operator a difference between an actual posture and a diagnostic posture of the construction machine; set a sampling condition in measurement of the pressure during the diagnostic action; calculate a pressure pulsation amplitude of the pump based on a measured value of the pressure sampled during the diagnostic action under the set sampling condition; determine whether there is an anomaly in the pump based on the calculated pressure pulsation amplitude; and cause the display device to display a result of the determining whether there is an anomaly.

### Advantageous Effects of Invention

According to the present invention, it is possible to provide a pump diagnostic device and a construction machine capable of performing a precise and accurate diagnosis.

### Brief Description of Drawings

Fig. 1 is a view of a configuration of a hydraulic pump.
Fig. 2 is a diagram illustrating a configuration of a hydraulic excavator including the hydraulic pump shown in Fig. 1.
Fig. 3 is a diagram illustrating changes in pressure over time during an anomaly of the hydraulic pump shown in Fig. 1.
Fig. 4 is a block diagram illustrating a functional configuration of the hydraulic excavator including a diagnostic device for diagnosing the hydraulic pump shown in Fig. 1.
Fig. 5 is a diagram illustrating an exemplary display of an action instruction outputted from an action instruction section shown in Fig. 4.
Fig. 6 is a diagram illustrating a sampling rate set by a measurement condition setting section shown in Fig. 4.
Fig. 7 is a diagram showing a probability density distribution of measured values shown in Fig. 6.
Fig. 8 is a diagram showing an exemplary display of a determination result obtained by an anomaly determination section shown in Fig. 4.
Fig. 9 is a flowchart of a diagnostic process performed by the diagnostic device shown in Fig. 4.
Fig. 10 is a diagram showing an exemplary display of an anomaly level of the hydraulic pump identified through the diagnostic process shown in Fig. 9.

### Description of Embodiments

Hereinafter, embodiments of the present invention will be described with reference to the drawings. Unless otherwise specified, elements denoted by identical reference signs in the embodiments have the same function in the embodiments, and repeated description thereof will be omitted.

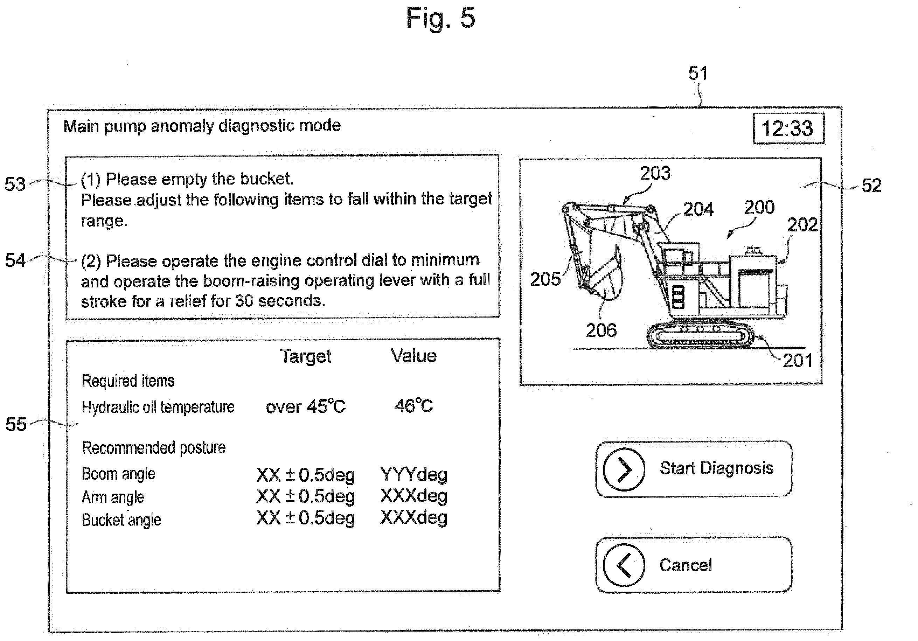

In the present embodiment, as the pump diagnostic device, a diagnostic device 40 for diagnosing a hydraulic pump 1 discharging hydraulic oil that transmits power to the elements of a construction machine will be described by way of example. In the present embodiment, as the construction machine, a hydraulic excavator 200 as shown in Fig. 5 will be described by way of example, where the diagnostic device 40 is mounted on the hydraulic excavator 200. However, the diagnostic device according to the present invention may be applicable also to a hydraulic pump mounted on construction machines other than the hydraulic excavator 200, for example, wheel loaders, dump trucks, or road machines.

Furthermore, the diagnostic device according to the present invention may also be provided outside of the construction machine. In this case, for example, the diagnostic device is configured to be able to communicate with the construction machine or the hydraulic pump. Further, the diagnostic device may be configured to receive information required for diagnosis from the construction machine or the hydraulic pump and execute a diagnostic process, and also to transmit an instruction required for diagnosis and a diagnosis result to the construction machine.

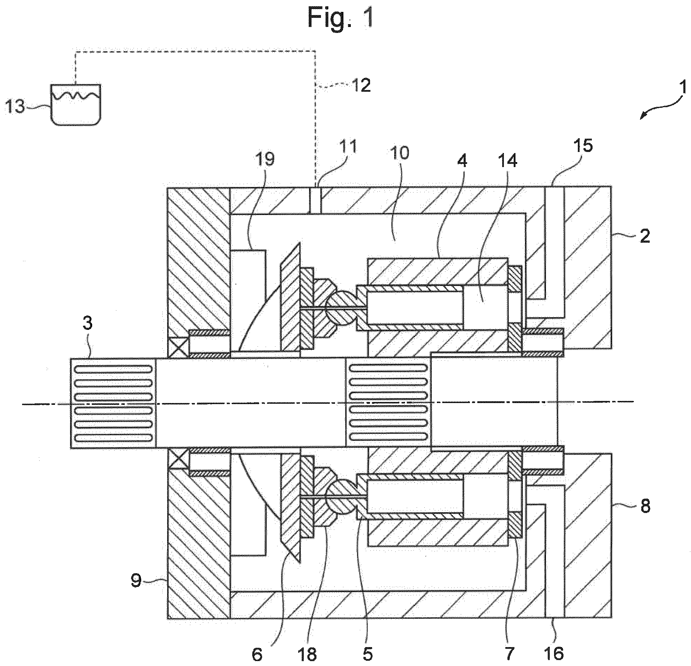

Fig. 1 is a view of a configuration of the hydraulic pump 1. Fig. 1 is a schematic cross-sectional view taken along an axial direction of the hydraulic pump 1.

The hydraulic pump 1 shown in Fig. 1 is a variable-displacement swash-plate type axial piston pump. The hydraulic pump 1 may be a bent-axis type piston pump, a vane pump, or a gear pump. The hydraulic pump 1 is used in the construction machine, such as the hydraulic excavator 200, and is driven to rotate by a prime mover 30, such as an engine or motor. The hydraulic pump 1 includes a casing 2, a shaft 3, a cylinder block 4, pistons 5, a swash plate 6, and a valve plate 7.

The casing 2 includes a closed-bottomed cylindrical casing body 8, and a lid 9 that closes an opening of the casing body 8. The lid 9 and the casing body 8 form a drain oil chamber 10 therebetween. The casing body 8 is provided with a drain port 11. The drain port 11 is connected to an oil tank 13 that stores hydraulic oil, via a drain pipe 12. The shaft 3 is rotatably supported in the casing 2 and rotates with the rotation of the prime mover 30.

The cylinder block 4 is fixed to the periphery of the shaft 3 via a spline provided on the periphery of the shaft 3. The cylinder block 4 rotates with the rotation of the shaft 3, inside of the casing body 8. The cylinder block 4 is disposed such that one end face faces the swash plate 6 and the other end face is slidable on the valve plate 7.

The cylinder block 4 is provided with a plurality of cylinder holes 14. The cylinder holes 14 are disposed circumferentially and equidistantly around the shaft 3 in the cylinder block 4. Each cylinder hole 14 is provided to extend parallel to the axial direction of the cylinder block 4. Each cylinder hole 14 is open toward the valve plate 7, and is in communication with a discharge port 15 and a suction port 16.

The piston 5 is disposed so as to be slidable inside of each cylinder hole 14. On the swash plate 6 side of the piston 5, a shoe 18 is provided so as to be swingable relative to the piston 5. Each piston 5 reciprocates in the cylinder hole 14 along the axial direction with the rotation of the cylinder block 4. Accordingly, each piston 5 sucks hydraulic oil from the suction port 16 into the cylinder hole 14, compresses the sucked hydraulic oil, and discharges pressure oil from the discharge port 15. The shoe 18 slidably abuts on the smooth surface of the swash plate 6. The shoe 18 slides in a circular orbit with respect to the smooth surface of the swash plate 6 with the rotation of the cylinder block 4.

The swash plate 6 is supported so as to be able to tilt by a swash plate support member 19 provided on the lid 9 of the casing 2. The surface of the swash plate 6 on the side opposite to the lid 9 is a smooth surface on which the shoe 18 slides. With the sliding of the shoe 18 on the smooth surface of the swash plate 6 with the rotation of the cylinder block 4, the piston 5 can reciprocate in the cylinder hole 14. The surface of the swash plate 6 on the side adjacent to the lid 9 is provided with a pair of legs (only one of them is shown) of convex curved surfaces. The pair of legs provided on the swash plate 6 conforms to a pair of concave curved surfaces (only one of them is shown) provided on the surface of the swash plate support member 19 on the side opposite to the lid 9.

Here, a small gap (not shown) is formed between the cylinder hole 14 and the piston 5 to increase the sliding property of the piston 5. This gap is in communication with the drain oil chamber 10 of the casing 2. Part of the pressure oil in the cylinder hole 14 leaks out through this gap into the drain oil chamber 10 of the casing 2. Further, a small gap (not shown) is formed between the shoe 18 and the swash plate 6 to increase the sliding property of the shoe 18. This gap is in communication with the inside of the cylinder hole 14 via a passage provided in the inside of the shoe 18 and the piston 5. Part of the pressure oil in the cylinder hole 14 leaks out through this gap into the drain oil chamber 10 of the casing 2.

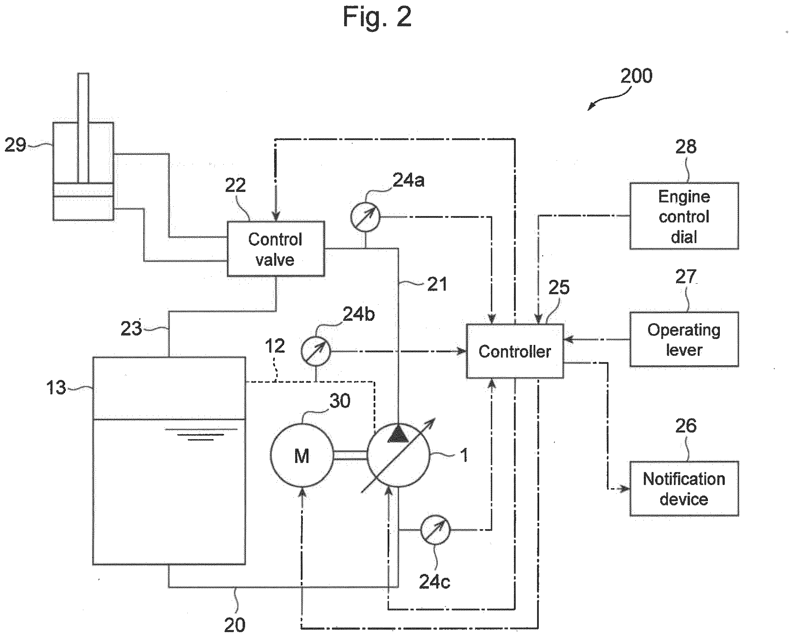

Fig. 2 is a diagram illustrating a configuration of the hydraulic excavator 200 including the hydraulic pump 1 shown in Fig. 1.

The drain port 11 of the hydraulic pump 1 is connected to the oil tank 13 via the drain pipe 12. The suction port 16 of the hydraulic pump 1 is connected to the oil tank 13 via the suction pipe 20. The hydraulic pump 1 sucks the hydraulic oil supplied from the oil tank 13 via the suction pipe 20. The discharge port 15 of the hydraulic pump 1 is connected to a control valve 22 via a discharge pipe 21. The hydraulic pump 1 pressure-feeds the pressure oil to the control valve 22 via the discharge pipe 21. The control valve 22 distributes the pressure oil to each hydraulic actuator 29 of the hydraulic excavator 200.

The hydraulic excavator 200 includes a lower traveling body 201 that is able to self-propel, an upper turning body 202 turnably supported relative to the lower traveling body 201, and a front work device 203 provided on the upper turning body 202 (see Fig. 5). The front work device 203 includes a boom 204 driven by a boom cylinder, an arm 205 driven by an arm cylinder, and a bucket 206 driven by a bucket cylinder. Examples of the hydraulic actuator 29 of the hydraulic excavator 200 include the boom cylinder, the arm cylinder, the bucket cylinder, a turning motor, or a traveling motor. Return oil from the hydraulic actuator 29 is returned to the oil tank 13 through the control valve 22 and a return pipe 23.

The discharge pipe 21, the drain pipe 12, and the suction pipe 20 are respectively provided with pressure sensors 24a to 24c for measuring various types of pressure of the hydraulic pump 1. The pressure sensor 24a measures a discharge pressure of the hydraulic pump 1. The pressure sensor 24b measures a drain pressure of the hydraulic pump 1. The pressure sensor 24c measures a suction pressure of the hydraulic pump 1. Output signals of the pressure sensors 24a to 24c are inputted to a controller 25 that controls various actions of the hydraulic excavator 200 (i.e., controls the actions of the hydraulic pump 1, the control valve 22, and the prime mover 30, for example). Note that in the present embodiment, the pressure sensors 24a to 24c may also be collectively referred to as the "pressure sensor 24."

The controller 25 calculates measured values of the pressure of the hydraulic pump 1 from the output signals of the pressure sensor 24. The controller 25 includes a calculation section that calculates a pressure wave amplitude of the hydraulic pump 1 from time-series data on the measured values, and a storage section that stores a threshold for determining whether there is an anomaly in the hydraulic pump 1. The controller 25 compares the pressure wave amplitude with the threshold to diagnose the hydraulic pump 1, and outputs a diagnosis result to a notification device 26. The controller 25 also outputs, to the notification device 26, an action instruction for causing the hydraulic excavator 200 to perform a specific action as a diagnostic condition for diagnosing the hydraulic pump 1.

The notification device 26 notifies an operator of the hydraulic excavator 200, that is, a crew of the hydraulic excavator 200, of the diagnosis result or action instruction. The notification device 26 may also notify a user other than the operator, such as a manager of the hydraulic excavator 200, of the diagnosis result or action instruction. The operator operates an operating lever 27 and an engine control dial 28 (hereinafter also referred to as the "control dial 28") in accordance with the action instruction provided by the notification device 26, and operates the hydraulic excavator 200 so as to allow the hydraulic pump 1 to be diagnosed. Note that the control dial 28 is an operating device for controlling the number of revolutions of the engine that is the prime mover 30. The operating lever 27 is an operating device for controlling each component of the hydraulic excavator 200, such as the lower traveling body 201, the upper turning body 202, and the front work device 203.

In addition, in response to the operator's operation of the operating lever 27 and the control dial 28, the controller 25 controls the actions of the hydraulic excavator 200. Specifically, operation signals outputted from the operating lever 27 and the control dial 28 are inputted to the controller 25. The controller 25 controls the actions of the control valve 22, the prime mover 30, and the hydraulic pump 1 according to the received operation signals. At this time, the controller 25 monitors whether the posture of the hydraulic excavator 200 and the pressure of the hydraulic pump 1 are in a condition (i.e., diagnostic posture and diagnostic pressure) that is expected when the operation in accordance with the action instruction (i.e., the operation corresponding to the diagnostic action) is performed. If they satisfy the diagnostic condition, the hydraulic pump 1 is diagnosed.

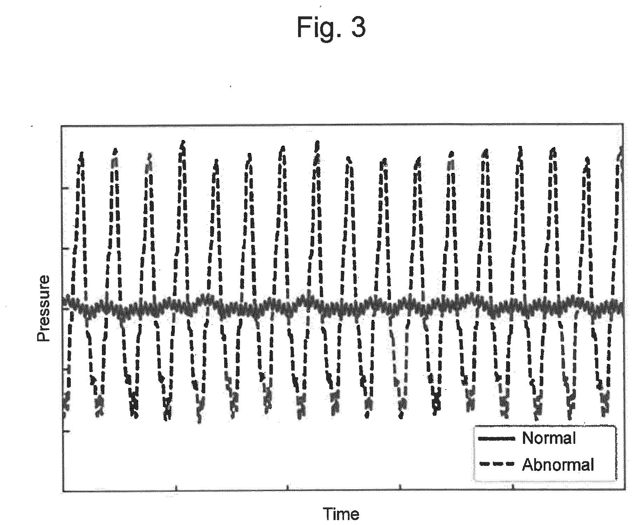

Fig. 3 is a diagram illustrating changes in pressure over time during an anomaly of the hydraulic pump 1 shown in Fig. 1. In Fig. 3, the horizontal axis represents time and the vertical axis represents pressure of the hydraulic pump 1. Fig. 3 shows changes in the pressure of the hydraulic pump 1 over time when there is a damage to part of the plurality of pistons 5.

As described above, when the hydraulic pump 1 is driven by the prime mover 30, the cylinder block 4 rotates and the piston 5 reciprocates in the cylinder hole 14. At this time, part of the pressure oil in the cylinder hole 14 leaks out into the drain oil chamber 10 of the casing 2 through the gap between the cylinder hole 14 and the piston 5 and the gap between the shoe 18 and the swash plate 6. When there is any damage to the piston 5, the cylinder hole 14, or the shoe 18, these gaps become larger. If these gaps become larger, the amount of movement of the hydraulic oil between the discharge port 15, suction port 16, or drain port 11, and the drain oil chamber 10 increases. In this case, the pressure (the discharge pressure, the suction pressure, or the drain pressure) at the discharge port 15, the suction port 16, or the drain port 11 changes.

Specifically, when the damaged piston 5, cylinder hole 14, or shoe 18 passes across the discharge port 15, the pressure in the drain oil chamber 10 rises. Then, as shown in Fig. 3, it is assumed that pressure pulsations (broken lines in Fig. 3) having a period that coincides with an integer multiple of a rotation period of the hydraulic pump 1 occur in the pipes connected to the ports of the hydraulic pump 1. Comparing the assumed pressure pulsation amplitude with the threshold allows a diagnosis of the hydraulic pump 1.

However, normally, for example, the change width of changes in pressure over time caused by the tilting of the swash plate 6, or the change width of changes in pressure over time caused by the operation of the hydraulic excavator 200 is larger than the range of such pressure pulsation amplitude (i.e., the change width of changes in pressure over time caused by the anomaly in the hydraulic pump 1). Therefore, for a precise and accurate diagnosis of the hydraulic pump 1, it is important to distinguish whether or not the changes in the pressure of the hydraulic pump 1 over time are caused by the anomaly in the hydraulic pump 1.

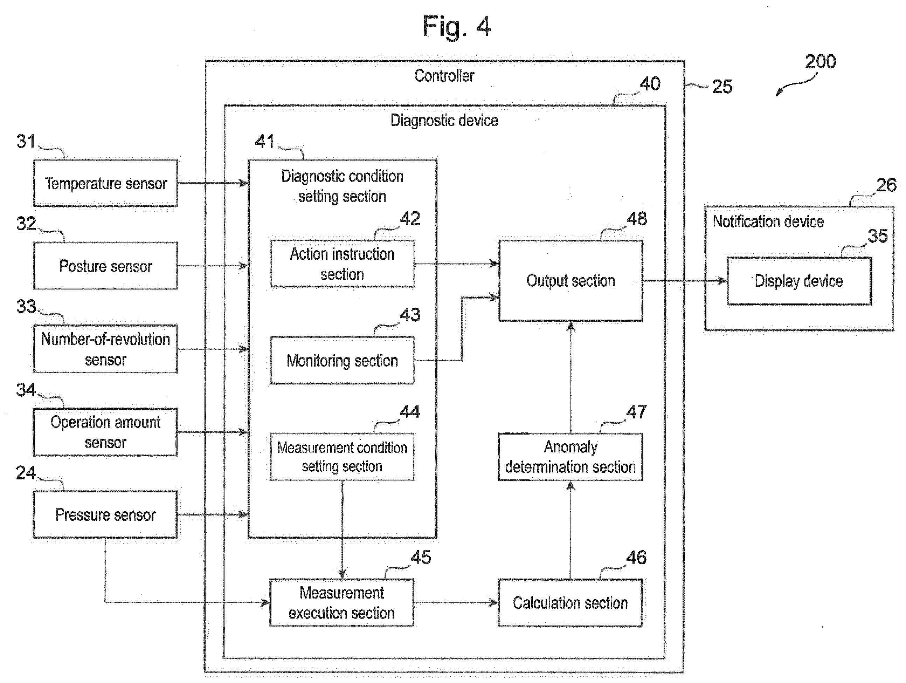

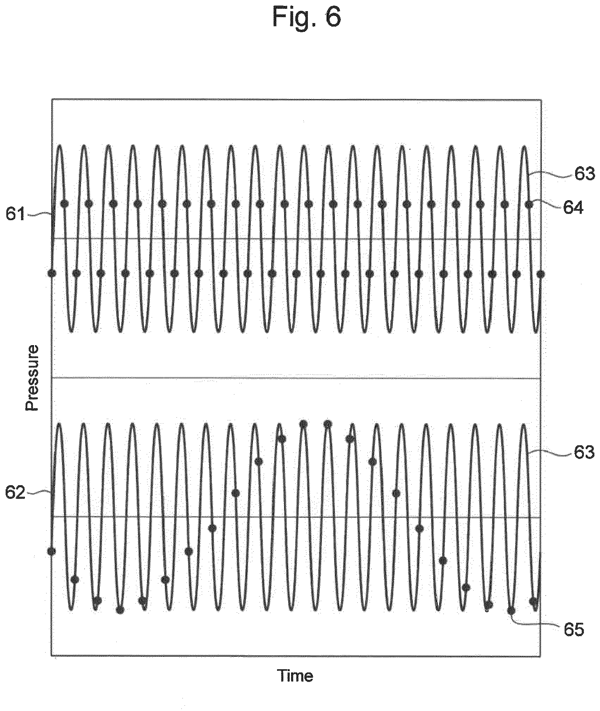

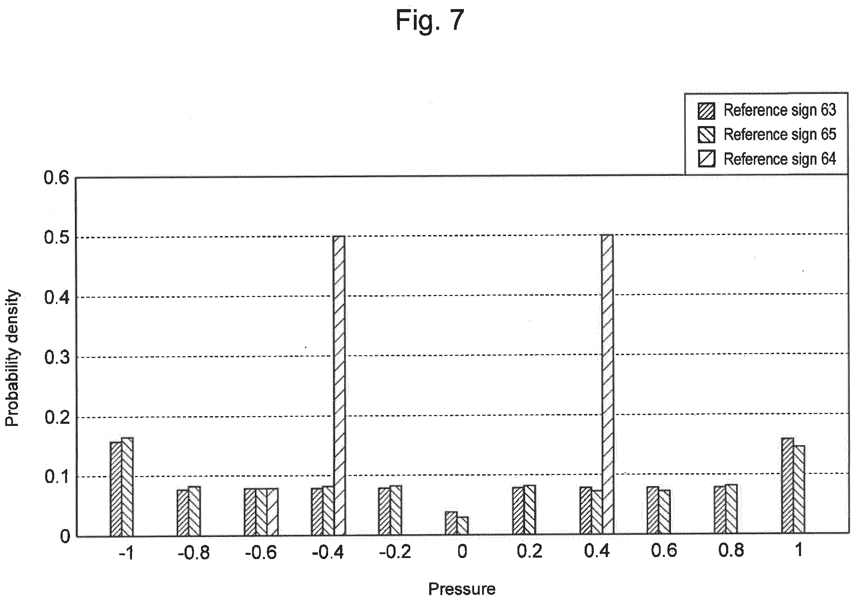

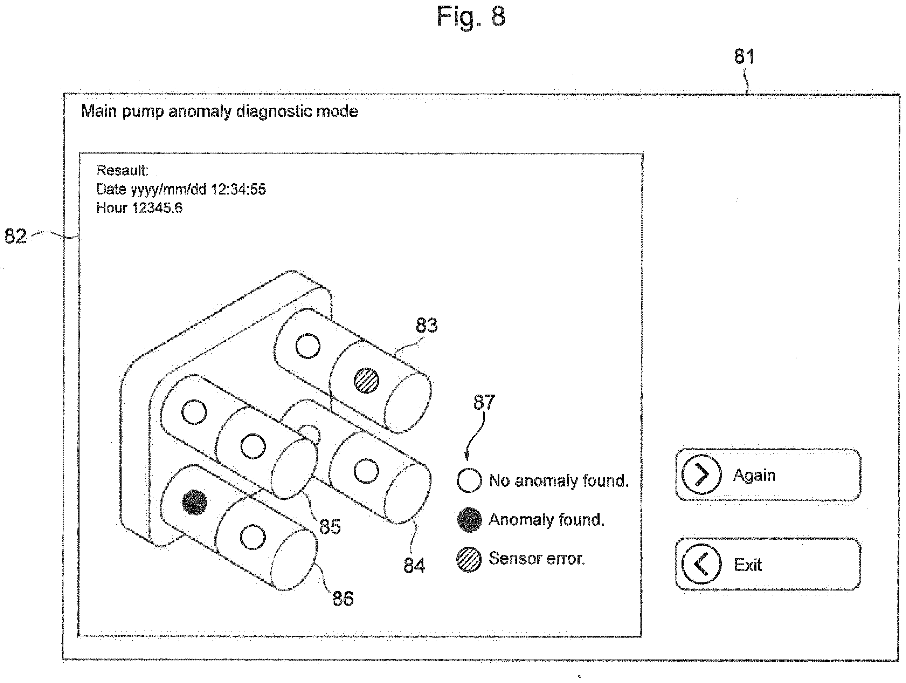

Fig. 4 is a block diagram illustrating a functional configuration of the hydraulic excavator 200 including the diagnostic device 40 for diagnosing the hydraulic pump 1 shown in Fig. 1. Fig. 5 is a diagram illustrating an exemplary display of an action instruction outputted from an action instruction section 42 shown in Fig. 4. Fig. 6 is a diagram illustrating a sampling rate set by a measurement condition setting section 44 shown in Fig. 4. Fig. 7 is a diagram showing a probability density distribution of measured values shown in Fig. 6. Fig. 8 is a diagram showing an exemplary display of a determination result obtained by an anomaly determination section 47 shown in Fig. 4.

The diagnostic device 40 for diagnosing the hydraulic pump 1 is configured to include a processor and a storage device. Various functions of the diagnostic device 40 are implemented by the execution of programs stored in the storage device by the processor. Note that in the present embodiment, the diagnostic device 40 for diagnosing the hydraulic pump 1 is installed in the controller 25 of the hydraulic excavator 200.

To the input side of the diagnostic device 40, as shown in Fig. 4, a temperature sensor 31, a posture sensor 32, a number-of-revolution sensor 33, an operation amount sensor 34, and the pressure sensor 24, which are mounted on the hydraulic excavator 200, are connected. The temperature sensor 31 is a sensor for measuring a temperature of the hydraulic oil. The posture sensor 32 is a sensor for measuring a posture of the hydraulic excavator 200. The posture sensor 32 includes a boom angle sensor for measuring a rotation angle of the boom 204, an arm angle sensor for measuring a rotation angle of the arm 205, a bucket angle sensor for measuring a rotation angle of the bucket 206, and a turning angle sensor for measuring a turning angle of the upper turning body 202. The number-of-revolution sensor 33 is a sensor for measuring the number of revolutions of the prime mover 30. The operation amount sensor 34 is a sensor for measuring operation amounts of the operating lever 27 and the control dial 28.

To the output side of the diagnostic device 40, a display device 35 is connected. The display device 35 is part of the notification device 26, and serves as a display provided in a cab of the hydraulic excavator 200 in the present embodiment. Note that when the diagnostic device 40 is provided outside of the hydraulic excavator 200, the display device 35 may include a display provided in an information terminal of a user other than the operator of the hydraulic excavator 200, for example, a manager responsible for overall management of the construction machines, other than the hydraulic excavator 200, located away from the hydraulic excavator 200.

In the present embodiment, the diagnostic device 40 includes a diagnostic condition setting section 41, a measurement execution section 45, a calculation section 46, an anomaly determination section 47, and an output section 48.

The diagnostic condition setting section 41 sets a diagnostic condition for diagnosing the hydraulic pump 1. Examples of the diagnostic condition include a condition concerning a state or action of the hydraulic excavator 200, and a condition concerning measurement of the pressure of the hydraulic pump 1. Specifically, the diagnostic condition setting section 41 includes an action instruction section 42, a monitoring section 43, and a measurement condition setting section 44.

The action instruction section 42 outputs, to the output section 48, an action instruction for causing the hydraulic excavator 200 to perform a specific action so as to allow the hydraulic pump 1 to be diagnosed. The output section 48 causes the display device 35 to display the action instruction outputted from the action instruction section 42. In the present embodiment, the action instruction is information for instructing the operator to cause the hydraulic excavator 200 to perform the specific action, such that the state including the rotational speed of the hydraulic pump 1, the temperature of the hydraulic oil, and the posture and load of the hydraulic excavator 200 will shift to a state suitable for a diagnosis of the hydraulic pump 1.

In the present embodiment, the action instruction section 42 outputs an action instruction for causing the display device 35 to display a screen instructing the operator to operate the hydraulic excavator 200 to perform a diagnostic action while showing the operator a difference between an actual posture and a diagnostic posture of the hydraulic excavator 200 so as to perform a predetermined diagnostic action after the front work device 203 (e.g., the boom 204, the boom 204 and the arm 205) of the hydraulic excavator 200 achieves a predetermined diagnostic posture.

More specifically, the action instruction outputted from the action instruction section 42 may include a first action instruction 53 and a second action instruction 54, as shown in Fig. 5. The first action instruction 53 is an action instruction for shifting the hydraulic excavator 200 to a predetermined state. The second action instruction 54 is an action instruction for causing the hydraulic excavator 200 placed in the predetermined state in accordance with the first action instruction 53 to perform a predetermined action.

Fig. 5 shows an example of a screen 51 displayed on the display device 35, including the first action instruction 53 and the second action instruction 54. In the example of Fig. 5, the first action instruction 53 is an instruction to the operator to empty the bucket 206 of the hydraulic excavator 200 and adjust items 55 such that an actual measurement value (Value) falls within a target range (Target). That is, the actual measurement value (Value) shown in Fig. 5 is an example of information corresponding to the actual posture of the hydraulic excavator 200, and the target range (Target) shown in Fig. 5 is an example of information corresponding to the diagnostic posture. The action instruction section 42 causes the display device 35 to display the screen 51 displaying both the actual measurement value (Value) and the target range (Target), so as to show the operator the difference between the actual posture and the diagnostic posture of the hydraulic excavator 200.

In the example of Fig. 5, the second action instruction 54 is an instruction to the operator to, after the operation in accordance with the first action instruction 53, operate the control dial 28 to set the number of revolutions of the prime mover 30 to minimum, and operate a boom-raising operating lever of the operating lever 27 with a full stroke for a relief for 30 seconds.

Note that examples of the other methods for showing the operator the difference between the actual posture and the diagnostic posture of the hydraulic excavator 200 include displaying, in an image display area 52 of the screen 51, side views or partial side views of two hydraulic excavators 200 corresponding to the actual posture and the diagnostic posture, or displaying a difference between the above-described actual measurement value (Value) and target range (Target) in the screen 51.

By the operator's operation of the hydraulic excavator 200 in accordance with the first action instruction 53 and the second action instruction 54, the state including the rotational speed of the hydraulic pump 1, the temperature of the hydraulic oil, and the posture and load of the hydraulic excavator 200 shifts to a steady state suitable for a diagnosis of the hydraulic pump 1. During this steady state, the diagnostic device 40 measures the pressure of the hydraulic pump 1 and diagnoses the hydraulic pump 1. In particular, the diagnostic device 40 measures the pressure of the hydraulic pump 1 while the operator operates the boom-raising operating lever of the operating lever 27 with a full stroke for a relief for 30 seconds in accordance with the second action instruction 54.

Accordingly, the diagnostic device 40 can stably measure the pressure of the hydraulic pump 1 with the condition concerning the state or action of the hydraulic excavator 200 always set to the same condition. Thus, the diagnostic device 40 can definitely distinguish whether or not changes in the pressure over time are caused by the anomaly in the hydraulic pump 1. Therefore, the diagnostic device 40 can accurately and stably diagnose the hydraulic pump 1.

The monitoring section 43 acquires measured values of the temperature sensor 31, the posture sensor 32, the number-of-revolution sensor 33, the operation amount sensor 34, and the pressure sensor 24, and monitors whether the operator is operating the hydraulic excavator 200 in accordance with the action instruction outputted from the action instruction section 42. The monitoring section 43 outputs the measured values of the sensors and the monitoring result to the output section 48. The output section 48 causes the display device 35 to display the monitoring result outputted from the monitoring section 43, and the like.

This allows the diagnostic device 40 to notify the operator whether or not the operator is operating the hydraulic excavator 200 in accordance with the action instruction outputted from the action instruction section 42. The operator can adjust at an early stage the operation amount of the operating lever 27 or the control dial 28. Since the diagnostic device 40 can measure the pressure of the hydraulic oil with the condition concerning the state or action of the hydraulic excavator 200 always surely set to the same condition, the diagnostic device 40 can more accurately and stably diagnose the hydraulic pump 1.

Further, in the present embodiment, the diagnostic device 40 stores, as monitoring criteria, a monitoring parameter of the monitoring section 43 corresponding to the diagnostic posture and a variation of the monitoring parameter of the monitoring section 43 corresponding to the diagnostic action, as described above. The diagnostic device 40, based on the situation of divergence of the actual monitoring result from the parameters serving as the monitoring criteria, determines whether or not the hydraulic excavator 200 has achieved the diagnostic posture instructed by the action instruction section 42 or determines whether or not the hydraulic excavator 200 has performed the diagnostic action. Further, if the hydraulic excavator 200 has not achieved the diagnostic posture or if the hydraulic excavator 200 has not performed the diagnostic action, the diagnostic device 40 causes the display device 35 to display information indicating that the diagnostic device 40 was unable to perform a diagnosis under an appropriate condition (recommended posture and recommended action) (e.g., text information such as "Diagnosis Failed"). In such cases, the diagnostic device 40 again causes the action instruction section 42 to output an action instruction to operate the hydraulic excavator 200 to perform the diagnostic action after achieving the diagnostic posture. Note that if a diagnosis under an appropriate condition was performed, the diagnostic device 40 may also cause the display device 35 to display information indicating that the diagnosis under an appropriate condition was performed (e.g., text information such as "Successfully Diagnosed").

The measurement condition setting section 44 sets a condition concerning measurement of the pressure of the hydraulic pump 1 in the measurement execution section 45. Specifically, the measurement condition setting section 44 sets a sampling condition in pressure measurement during a specific action (i.e., during a diagnostic action) of the hydraulic excavator 200 in the measurement execution section 45. In particular, the measurement condition setting section 44 sets a sampling rate in measurement of the pressure of the hydraulic pump 1. The sampling rate set by the measurement condition setting section 44 will be described in detail later with reference to Fig. 6 and Fig. 7.

The measurement execution section 45 measures the pressure of the hydraulic pump 1 during the specific action of the hydraulic excavator 200 in accordance with the condition set by the measurement condition setting section 44. Specifically, the measurement execution section 45 samples the pressure of the hydraulic pump 1 at the sampling rate set by the measurement condition setting section 44: The measurement execution section 45 samples the pressure of the hydraulic pump 1 over a predetermined sampling time using at least one of the pressure sensors 24a to 24c of the pressure sensor 24. Through this sampling, the measurement execution section 45 discretely acquires measured values of the pressure. The measured values of the pressure acquired by the measurement execution section 45 represent time-series data on the pressure discretely acquired. The measurement execution section 45 outputs the acquired measured values to the calculation section 46.

The calculation section 46 calculates a pressure pulsation amplitude assumed as changes in the pressure over time based on the acquired measured values of the pressure. That is, the calculation section 46 acquires measured values of the pressure of the hydraulic pump 1 sampled during the specific action of the hydraulic excavator 200 under the sampling condition (specifically, sampling rate) set by the measurement condition setting section 44, and based on the acquired measured values of the pressure, calculates a pressure pulsation amplitude of the hydraulic pump 1. Specifically, the calculation section 46 performs statistical processing on the measured values of the pressure discretely acquired at the sampling rate set by the measurement condition setting section 44 to calculate a range of the measured values of the pressure, thus calculating a range of the pressure pulsation amplitude (oscillation). The calculation section 46 may calculate a distribution of the measured values of the pressure discretely acquired and calculate a pressure pulsation amplitude from the calculated distribution. The calculation section 46 outputs the calculated pressure pulsation amplitude to the anomaly determination section 47.

The anomaly determination section 47 determines whether there is an anomaly in the hydraulic pump 1 based on the pressure pulsation amplitude calculated by the calculation section 46. Specifically, the anomaly determination section 47 stores in advance a threshold for determining whether there is an anomaly in the hydraulic pump 1. If the pressure pulsation amplitude calculated by the calculation section 46 is larger than or equal to the threshold stored in advance, the anomaly determination section 47 determines that there is an anomaly in the hydraulic pump 1. If the pressure pulsation amplitude calculated by the calculation section 46 is smaller than the threshold stored in advance, the anomaly determination section 47 determines that the hydraulic pump 1 is normal. The anomaly determination section 47 outputs an anomaly determination result for the hydraulic pump 1 to the output section 48.

The anomaly determination section 47 may further store in advance a plurality of thresholds having different values. The plurality of thresholds having different values is used to identify an anomaly level of the hydraulic pump 1. The anomaly determination section 47 identifies an anomaly level of the hydraulic pump 1 by comparing the pressure pulsation amplitude calculated by the calculation section 46 with the plurality of thresholds having different values. The anomaly determination section 47 outputs the identified anomaly level of the hydraulic pump 1 to the output section 48. The output section 48 outputs, to the display device 35, the anomaly level of the hydraulic pump 1 identified by the anomaly determination section 47 and causes the display device 35 to display the anomaly level.

This allows the diagnostic device 40 to quantitatively indicate the severity of the anomaly in the hydraulic pump 1, and to notify a user of a sign of serious anomaly occurrence in the hydraulic pump 1. The user can schedule the repair timing or replacement timing of the hydraulic pump 1 before a malfunction of the hydraulic pump 1 occurs. Accordingly, the diagnostic device 40 can significantly reduce downtime of the hydraulic excavator 200, and can improve productivity of the hydraulic excavator 200.

Now referring to Fig. 6 and Fig. 7, the sampling rate set by the measurement condition setting section 44 will be described. As described above, when there is any damage to the piston 5, the cylinder hole 14, or the shoe 18, it is assumed that pressure pulsations occur in the drain pressure, discharge pressure, or suction pressure of the hydraulic pump 1. To acquire an accurate pressure waveform of the pressure pulsations, it is commonly required to sample the pressure of the hydraulic pump 1 with a high time resolution equal to ten times the frequency of the pressure pulsations (hereinafter referred to as "pulsation frequency") or higher. Methods for diagnosing the hydraulic pump 1 based on the pressure waveform include a method of frequency analysis on the pressure waveform sampled with a high time resolution.

However, when the hydraulic pump 1 is diagnosed with the frequency analysis method, the pressure measurement device and the arithmetic processing device are very costly. Furthermore, while the rotational speed of the hydraulic pump 1 is directly influenced by the change in the number of revolutions of the prime mover 30, the number of revolutions of the prime mover 30 momentarily changes during operation of the hydraulic excavator 200, and thus there is a possibility that the frequency component of the pressure could not be acquired stably. For this reason, it is difficult to perform a precise and accurate diagnosis of the hydraulic pump 1 with the frequency analysis method.

Thus, the diagnostic device 40 of the present embodiment samples the pressure of the hydraulic pump 1 at a sampling rate smaller than the frequency of the pressure of the hydraulic pump 1 (pulsation frequency). The diagnostic device 40 performs statistical processing on the measured values of the pressure discretely acquired at the set sampling rate to calculate a pressure pulsation amplitude assumed as the changes in the pressure over time. The diagnostic device 40 determines whether there is an anomaly in the hydraulic pump 1 based on the calculated pressure pulsation amplitude. In this way, the diagnostic device 40 diagnoses the hydraulic pump 1.

Note that the diagnostic device 40 samples the pressure of the hydraulic pump 1 not at a sampling rate of around 0.5n times (n is an integer) the frequency of the pressure of the hydraulic pump 1 (pulsation frequency). For example, as shown in the upper graph 61 of Fig. 6, consider a case where the hydraulic pump 1 is subjected to pressure pulsations, and the diagnostic device 40 samples the pressure at a sampling rate of 0.5 times the frequency of the pressure (pulsation frequency). In this case, the diagnostic device 40 acquires a measured value 64 of the pressure at a sampling rate of 0.5 times the frequency of the waveform 63 of the pressure (i.e., the waveform of the pressure pulsations). The range of the acquired measured value 64 (the range of the measured value 64 from a maximum to a minimum) differs from the range of the amplitude of the waveform 63 (the range from a peak value of a positive amplitude to a peak value of a negative amplitude). As clearly seen from the comparison between the "reference sign 64" and the "reference sign 63" in Fig. 7, the probability density distribution of the measured value 64 clearly differs from the probability density distribution of the waveform 63. Such a phenomenon also applies to the case of measuring the pressure at a sampling rate of around 0.5n times the frequency of the waveform 63 of the pressure. Accordingly, when the diagnostic device 40 samples the pressure of the hydraulic pump 1 at a sampling rate of around 0.5n times the frequency of the pressure of the hydraulic pump 1 (pulsation frequency), it is difficult to calculate so as to cover the entire range of the pressure pulsation amplitude assumed as the changes in the pressure over time.

Meanwhile, for example, as shown in the lower graph 62 of Fig. 6, consider a case where the hydraulic pump 1 is subjected to pressure pulsations, and the diagnostic device 40 samples the pressure not at a sampling rate of around 0.5n times the frequency of the pressure of the hydraulic pump 1 (pulsation frequency). In this case, the diagnostic device 40 acquires a measured value 65 of the pressure. The range of the acquired measured value 65 (the range of the measured value 65 from a maximum to a minimum) coincides with the range of the amplitude of the waveform 63 (the range from a peak value of a positive amplitude to a peak value of a negative amplitude). As clearly seen from the comparison between the "reference sign 65" and the "reference sign 63" in Fig. 7, the probability density distribution of the measured value 65 substantially coincides with the probability density distribution of the waveform 63. Accordingly, when the diagnostic device 40 samples the pressure of the hydraulic pump 1 not at a sampling rate of around 0.5n times the frequency of the pressure of the hydraulic pump 1 (pulsation frequency), it is possible to calculate so as to cover the entire range of the pressure pulsation amplitude assumed as the changes in the pressure over time. The sampling rate other than a sampling rate of around 0.5n times the frequency of the pressure of the hydraulic pump 1 (pulsation frequency) is a sampling rate that allows calculation over the entire range of the pressure pulsation amplitude.

Note that as shown in Patent Literature 1, the frequency of the pressure of the hydraulic pump 1 can be obtained from the rotational speed of the hydraulic pump 1, that is, the number of revolutions of the prime mover 30 and the number of pistons 5 of the hydraulic pump 1. The sampling rate of around 0.5n times the frequency of the pressure of the hydraulic pump 1 can be obtained from the inverse of a sampling time.

In view of the above, the measurement condition setting section 44 sets the sampling rate in measurement of the pressure of the hydraulic pump 1 to a sampling rate which is smaller than the frequency of the pressure (pulsation frequency) and which allows calculation over the entire range of the pressure pulsation amplitude. The measurement execution section 45 samples the pressure of the hydraulic pump 1 at the sampling rate set by the measurement condition setting section 44. The calculation section 46 calculates a range of the measured values of the pressure discretely acquired at the sampling rate set by the measurement condition setting section 44 to calculate a range of the pressure pulsation amplitude. The anomaly determination section 47 determines whether there is an anomaly in the hydraulic pump 1 based on the pressure pulsation amplitude calculated by the calculation section 46.

This allows the diagnostic device 40 to acquire a pressure pulsation amplitude that is precise and accurate enough to determine whether there is an anomaly in the hydraulic pump 1, even when the diagnostic device 40 samples the pressure of the hydraulic pump 1 at a significantly lower sampling rate as compared to the case of using the frequency analysis method. Thus, the diagnostic device 40 can easily perform an accurate and stable diagnosis of the hydraulic pump 1.

The output section 48 outputs, to the display device 35, the action instruction received from the action instruction section 42, the monitoring result received from the monitoring section 43, and the like, and causes the display device 35 to display them. Furthermore, the output section 48 outputs, to the display device 35, a determination result obtained by the anomaly determination section 47 and causes the display device 35 to display the determination result. The output section 48 causes the display device 35 to display the determination result obtained by the anomaly determination section 47 using numerical values, characters, figures, colors, and the like.

Note that in the present embodiment, the hydraulic excavator 200 has a plurality of hydraulic pumps 1 mounted thereon. In the present embodiment, the calculation section 46 acquires measured values of the pressure for each of the plurality of hydraulic pumps 1, and calculates a pressure pulsation amplitude for each of the plurality of hydraulic pumps 1. The anomaly determination section 47 determines whether there is an anomaly in each of the plurality of hydraulic pumps 1. The output section 48 causes the display device 35 to collectively display, in one screen of the display device 35, the determination result for each of the plurality of hydraulic pumps 1 obtained by the anomaly determination section 47.

Fig. 8 shows an exemplary display on the display device 35, showing a screen 81 including an area 82 displaying a determination result obtained by the anomaly determination section 47. In the example of Fig. 8, the screen 81 collectively displays an anomaly determination result 87 for each of four hydraulic pumps 83 to 86 as the plurality of hydraulic pumps 1. In the present embodiment, as shown in Fig. 8, the display device 35 schematically displays the layout of the hydraulic pumps 83 to 86 mounted on the hydraulic excavator 200, and then overlays the diagnosis results for the hydraulic pumps 83 to 86 obtained by the anomaly determination section 47 on the layout of the hydraulic pumps 83 to 86.

This allows the diagnostic device 40 to cause the display device 35 to display the diagnosis results for the plurality of hydraulic pumps 1 mounted on the same hydraulic excavator 200 such that the user can intuitively compare the diagnosis results.

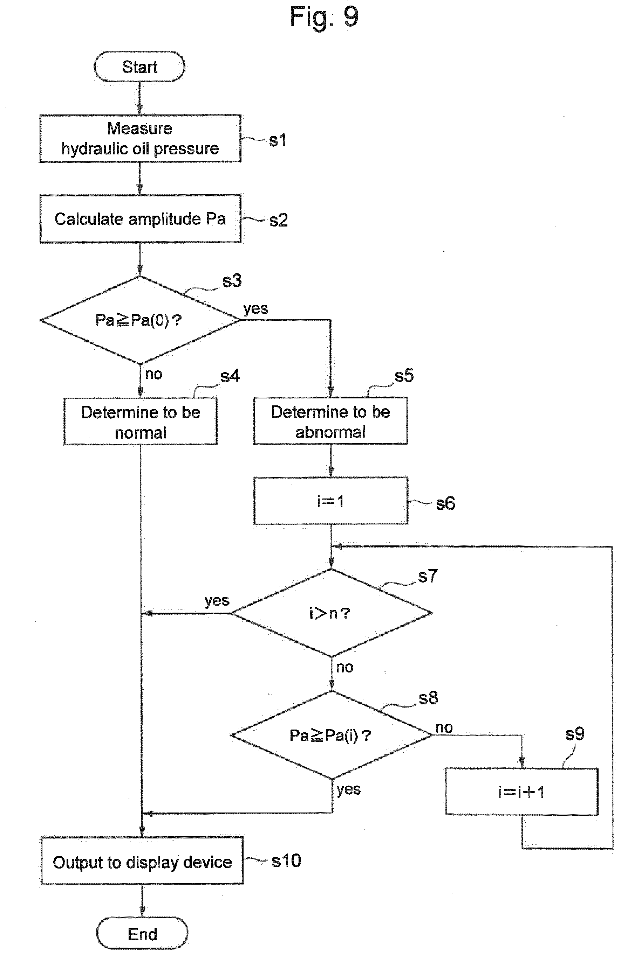

Fig. 9 is a flowchart of a diagnostic process performed by the diagnostic device 40 shown in Fig. 4.

The diagnostic device 40 performs the diagnostic process shown in Fig. 9 using a threshold Pa(0) for determining whether there is an anomaly in the hydraulic pump 1 and a threshold Pa(i)(i=1-n) for identifying an anomaly level of the hydraulic pump 1. In the example of Fig. 9, the larger the argument i, the smaller the threshold Pa(i) and the smaller the anomaly level of the hydraulic pump 1.

The threshold Pa(0) and the threshold Pa(i) may be values set in advance or values calculated in measurement of the pressure of the hydraulic pump 1. The threshold Pa(0) and the threshold Pa(i) may be values calculated based on a time-average of the pressure measured in the other hydraulic pump 1 of the same type mounted on the same hydraulic excavator 200 or values calculated based on a pressure pulsation amplitude calculated in the other hydraulic pump 1. The threshold Pa(0) and the threshold Pa(i) may be values obtained empirically from the operating situation of the hydraulic pump 1, such as the rotational speed of the hydraulic pump 1.

In step s1, the diagnostic device 40 measures a pressure of the hydraulic pump 1 and acquires a measured value of the pressure.

In step s2, the diagnostic device 40 calculates a pressure pulsation amplitude Pa based on the acquired measured value.

In step s3, the diagnostic device 40 determines whether or not the calculated pressure pulsation amplitude Pa is larger than or equal to the threshold Pa(0). If the pressure pulsation amplitude Pa is smaller than the threshold Pa(0), the diagnostic device 40 moves to step s4. If the pressure pulsation amplitude Pa is larger than or equal to the threshold Pa(0), the diagnostic device 40 moves to step s5.

In step s4, the diagnostic device 40 determines that the hydraulic pump 1 is normal. Thereafter, the diagnostic device 40 moves to step s10.

In step s5, the diagnostic device 40 determines that there is an anomaly in the hydraulic pump 1.

In step s6, the diagnostic device 40 sets the argument i of the threshold Pa(i) to its lower limit 1.

In step s7, the diagnostic device 40 determines whether the argument i of the threshold Pa(i) is larger than its upper limit n. If the argument i is larger than its upper limit n, the diagnostic device 40 moves to step s10. If the argument i is smaller than or equal to its upper limit n, the diagnostic device 40 moves to step s8.

In step s8, the diagnostic device 40 determines whether or not the calculated pressure pulsation amplitude Pa is larger than or equal to the threshold Pa(i). If the pressure pulsation amplitude Pa is larger than or equal to the threshold Pa(i), the diagnostic device 40 identifies an anomaly level of the hydraulic pump 1 corresponding to the threshold Pa(i). Thereafter, the diagnostic device 40 moves to step s10. The anomaly level of the hydraulic pump 1 corresponding to the threshold Pa(i) is defined in advance. Meanwhile, if the pressure pulsation amplitude Pa is smaller than the threshold Pa(i), the diagnostic device 40 moves to step s9.

In step s9, the diagnostic device 40 increments the argument i of the threshold Pa(i). Thereafter, the diagnostic device 40 moves to step s7.

In step s10, the diagnostic device 40 outputs, to the display device 35, the result of the determining whether there is an anomaly in the hydraulic pump 1 and the identified anomaly level of the hydraulic pump 1, and causes the display device 35 to display them. Thereafter, the diagnostic device 40 ends the diagnostic process shown in Fig. 9.

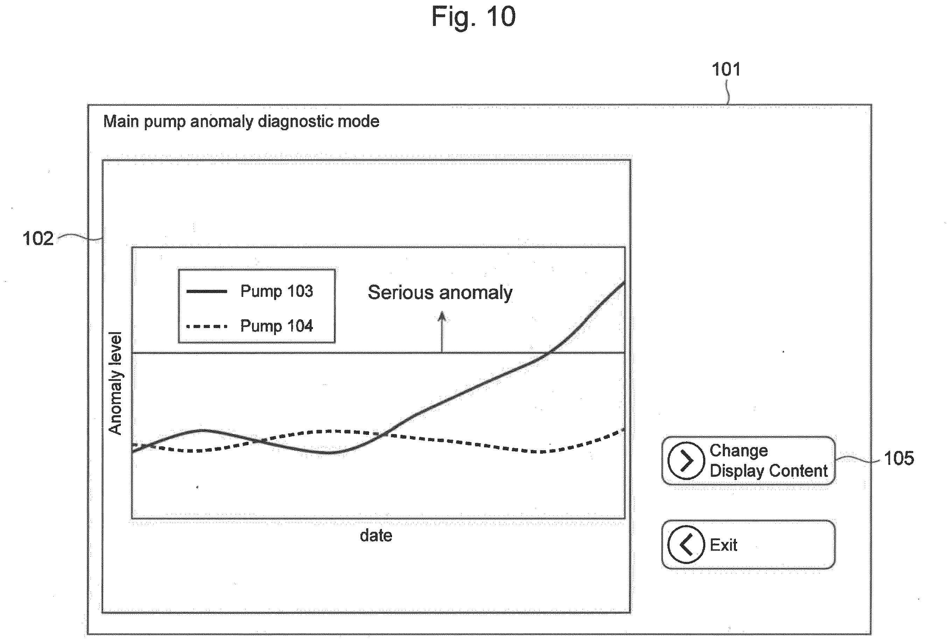

Fig. 10 is a diagram showing an exemplary display of the anomaly level of the hydraulic pump 1 identified through the diagnostic process shown in Fig. 9.

Fig. 10 shows an exemplary display on the display device 35, showing a screen 101 including an area 102 displaying transitions of anomaly levels of two hydraulic pumps 103, 104 as the plurality of hydraulic pumps 1. In the example of Fig. 10, the screen 101 collectively displays the transitions of the anomaly levels of the hydraulic pumps 103, 104 in a predetermined time period from the past to the present. In the example of Fig. 10, the user may change the display content in the area 102, such as the time period of transitions of the anomaly levels to be displayed, for example, by tapping an icon 105 on the screen 101. In the example of Fig. 10, it is indicated that the anomaly level of the hydraulic pump 104 is generally stable. In the example of Fig. 10, the anomaly level of the hydraulic pump 103 suddenly rises at a certain point, meaning that a serious anomaly has occurred in the hydraulic pump 103. Since the diagnostic device 40 can notify the user of a sign of serious anomaly occurrence as in the hydraulic pump 103 shown in Fig. 10, the diagnostic device 40 can prompt the user to repair or replace the hydraulic pump 1.

As described above, the diagnostic device 40 is a diagnostic device for diagnosing the hydraulic pump 1 mounted on the hydraulic excavator 200 and driven by the prime mover 30 of the hydraulic excavator 200 to supply pressure oil to the hydraulic actuator 29 of the hydraulic excavator 200. The diagnostic device 40 includes the action instruction section 42 that outputs an action instruction for causing the hydraulic actuator 29 to perform a specific action, the measurement condition setting section 44 that sets a sampling condition in measurement of the pressure of the hydraulic pump 1 during the specific action, the calculation section 46 that acquires a measured value of the pressure sampled during the specific action under the set sampling condition, and calculates a pressure pulsation amplitude of the hydraulic pump 1, the anomaly determination section 47 that determines whether there is an anomaly in the hydraulic pump 1 based on the calculated pressure pulsation amplitude, and the output section 48 that outputs a determination result obtained by the anomaly determination section 47 to the display device 35.

Accordingly, the diagnostic device 40 can stably measure the pressure of the hydraulic pump 1 with the condition concerning the state or action of the hydraulic excavator 200 always set to the same condition. Thus, the diagnostic device 40 can definitely distinguish whether or not changes in the pressure of the hydraulic pump 1 over time are caused by the anomaly in the hydraulic pump 1. Therefore, the diagnostic device 40 can accurately and stably diagnose the hydraulic pump 1. Consequently, according to the present embodiment, it is possible to provide the diagnostic device 40 for diagnosing the hydraulic pump 1 capable of performing a precise and accurate diagnosis.

Note that in the above-described embodiment, the sampling rate in measurement of the pressure of the hydraulic pump 1 set by the measurement condition setting section 44 is smaller than the frequency of the pressure of the hydraulic pump 1 (pulsation frequency) so as to allow calculation over the entire range of the pressure pulsation amplitude.

However, the measurement condition setting section 44 may set the number of revolutions of the prime mover 30 that drives the hydraulic pump 1, instead of the sampling rate in measurement of the pressure of the hydraulic pump 1, so as to allow calculation over the entire range of the pressure pulsation amplitude. Specifically, the measurement condition setting section 44 may set the number of revolutions of the prime mover 30 such that the set sampling rate is smaller than the frequency of the pressure of the hydraulic pump 1 (pulsation frequency). Accordingly, the action instruction section 42 may output an action instruction for rotating the prime mover 30 according to the set number of revolutions.

This allows the diagnostic device 40 to acquire a pressure pulsation amplitude that is precise and accurate enough to determine whether there is an anomaly in the hydraulic pump 1, even when it is difficult to appropriately set a sampling rate. Thus, the diagnostic device 40 can easily perform an accurate and stable diagnosis of the hydraulic pump 1 as compared to the case of using the frequency analysis method. Accordingly, the diagnostic device 40 is applicable to the hydraulic excavator 200.

The hydraulic excavator 200 is a construction machine including the lower. traveling body 201 that is able to self-propel, the upper turning body 202 turnably supported relative to the lower traveling body 201, the front work device 203 provided on the upper turning body 202, the hydraulic actuator 29 that drives the front work device 203, the hydraulic pump 1 that supplies pressure oil to the hydraulic actuator 29, the pressure sensor 24 that measures the pressure of the hydraulic pump 1, and the display device 35 that displays various kinds of information to an operator. The hydraulic excavator 200 includes the controller 25 that causes the display device 35 to display an operation instruction for an action of the front work device 203 and diagnoses the hydraulic pump 1. The controller 25 causes the display device 35 to display the screen 51 instructing the operator to operate the hydraulic excavator 200 to perform a diagnostic action while showing the operator a difference between an actual posture and a diagnostic posture of the hydraulic excavator 200. The controller 25 sets a sampling condition in measurement of the pressure during the diagnostic action. The controller 25 calculates a pressure pulsation amplitude of the hydraulic pump 1 based on the measured value of the pressure sampled during the diagnostic action under the set sampling condition. The controller 25 determines whether there is an anomaly in the hydraulic pump 1 based on the calculated pressure pulsation amplitude. The controller 25 causes the display device 35 to display a result of the determining whether there is an anomaly.

Accordingly, the hydraulic excavator 200 can stably measure the pressure of the hydraulic pump 1 with the condition concerning the state or action of the hydraulic excavator 200 always set to the same condition. Thus, the hydraulic excavator 200 can definitely distinguish whether or not changes in the pressure of the hydraulic pump 1 over time are caused by the anomaly in the hydraulic pump 1. Therefore, the hydraulic excavator 200 can accurately and stably diagnose the hydraulic pump 1. Consequently, according to the present embodiment, it is possible to provide the hydraulic excavator 200 capable of performing a precise and accurate diagnosis of the hydraulic pump 1.

Although the embodiment of the present invention has been described in detail above, the present invention is not limited to the above embodiment, and various changes are possible in so far as they are within the spirit of the present invention in the scope of the claims. In the present invention, it is possible to add, to a configuration of an embodiment, a configuration of another embodiment, to replace a configuration of an embodiment with a configuration of another embodiment, or to delete a part of a configuration of an embodiment.

### Reference Signs List

- 1: Hydraulic pump (pump)
- 24: Pressure sensor
- 25: Controller
- 29: Hydraulic actuator
- 30: Prime mover
- 35: Display device
- 40: Diagnostic device
- 42: Action instruction section
- 44: Measurement condition setting section
- 46: Calculation section
- 47: Anomaly determination section
- 48: Output section
- 200: Hydraulic excavator (construction machine)
- 201: Lower traveling body
- 202: Upper turning body
- 203: Front work device
- 204: Boom
- 205: Arm
- 206: Bucket

## Claims

1. A diagnostic device for diagnosing a pump mounted on a construction machine and driven by a prime mover of the construction machine to supply pressure oil to a hydraulic actuator of the construction machine, the diagnostic device comprising:
an action instruction section that outputs an action instruction for causing the hydraulic actuator to perform a specific action;
a measurement condition setting section that sets a sampling condition in measurement of a pressure of the pump during the specific action;
a calculation section that acquires a measured value of the pressure sampled during the specific action under the set sampling condition, and calculates a pressure pulsation amplitude of the pump;
an anomaly determination section that determines whether there is an anomaly in the pump based on the calculated pressure pulsation amplitude; and
an output section that outputs a determination result obtained by the anomaly determination section to a display device.

2. The diagnostic device for diagnosing the pump according to claim 1, wherein:
the measurement condition setting section sets a sampling rate in measurement of the pressure to be smaller than a pulsation frequency of the pressure; and
the calculation section calculates a range of the measured value of the pressure sampled at the set sampling rate to calculate a range of the pressure pulsation amplitude.

3. The diagnostic device for diagnosing the pump according to claim 1, wherein:
the measurement condition setting section sets a number of revolutions of the prime mover such that a sampling rate in measurement of the pressure is smaller than a pulsation frequency of the pressure; and
the action instruction section outputs an action instruction for rotating the prime mover according to the set number of revolutions.

4. The diagnostic device for diagnosing the pump according to claim 1, wherein:
the pump includes a plurality of pumps mounted on the construction machine;
the calculation section acquires the measured value of the pressure for each of the plurality of pumps, and calculates the pressure pulsation amplitude for each of the plurality of pumps;
the anomaly determination section determines whether there is an anomaly in each of the plurality of pumps; and
the output section causes the display device to collectively display, in one screen of the display device, a determination result for each of the plurality of pumps.

5. The diagnostic device for diagnosing the pump according to claim 1, wherein:
the anomaly determination section identifies an anomaly level of the pump by comparing the calculated pressure pulsation amplitude with a plurality of thresholds having different values; and
the output section outputs, to the display device, the identified anomaly level of the pump.

6. . The diagnostic device for diagnosing the pump according to claim 1, wherein:
the construction machine is a hydraulic excavator including a front work device having a boom, an arm, and a bucket; and
the action instruction section outputs an action instruction for causing the display device to display a screen instructing an operator of the hydraulic excavator to operate the hydraulic excavator to perform a diagnostic action while showing the operator a difference between an actual posture and a diagnostic posture of the hydraulic excavator.

7. A construction machine including a lower traveling body that is able to self-propel, an upper turning body turnably supported relative to the lower traveling body, a front work device provided on the upper turning body, a hydraulic actuator that drives the front work device, a pump that supplies pressure oil to the hydraulic actuator, a pressure sensor that measures a pressure of the pump, and a display device that displays various kinds of information to an operator,
the construction machine comprising:
a controller that causes the display device to display an operation instruction for an action of the front work device and diagnoses the pump,
wherein the controller is configured to:
cause the display device to display a screen instructing the operator to operate the construction machine to perform a diagnostic action while showing the operator a difference between an actual posture and a diagnostic posture of the construction machine;
set a sampling condition in measurement of the pressure during the diagnostic action;
calculate a pressure pulsation amplitude of the pump based on a measured value of the pressure sampled during the diagnostic action under the set sampling condition;
determine whether there is an anomaly in the pump based on the calculated pressure pulsation amplitude; and
cause the display device to display a result of the determining whether there is an anomaly.
